# EUROPÄISCHE PATENTSCHRIFT

(11) **EP 3 030 369 B1**
(45) Veröffentlichungstag und Bekanntmachung des Hinweises auf die Patenterteilung: **30.10.2019**
(21) Anmeldenummer: 14761270.9
(22) Anmeldetag: 04.08.2014
(51) Int. Cl.: B23C 5/08

(54) **TRENNFRÄSER-SCHNEIDEINSATZ**
MILLING TOOL-CUTTING INSERT
INSERT DE COUPE D'UNE FRAISE

(30) Priorität: 06.08.2013 AT 2572013 U
(43) Veröffentlichungstag der Anmeldung: 15.06.2016
(73) Patentinhaber: Ceratizit Austria Gesellschaft m.b.H., 6600 Reutte (AT)
(72) Erfinder: BRANDHOFER, Hannes, A-6652 Elbigenalp (AT); VENTURINI, Remus, 87672 Rosshaupten (DE)
(74) Vertreter: Ciesla, Dirk
(86) Internationale Anmeldenummer: PCT/AT2014/000151
(87) Internationale Veröffentlichungsnummer: WO 2015/017874

(56) Entgegenhaltungen:
- US-A1- 2006 120 812
- US-A1- 2012 251 251
- US-A1- 2013 051 936
- US-A1- 2013 071 194

## Beschreibung

Die vorliegende Erfindung betrifft einen Trennfräser-Schneideinsatz gemäß dem Oberbegriff des Patentanspruchs 1, einen Satz von Trennfräser-Schneideinsätzen, mit zumindest einem ersten solchen Trennfräser-Schneideinsatz und ein rotierendes Werkzeug zum Trennfräsen metallischer Werkstoffe gemäß dem Oberbegriff des Patentanspruchs 13.

Trennfräser kommen zum Abtrennen von Werkstücken und zur Nutenbildung in Werkstücken zum Einsatz. Trennfräser weisen einen scheibenförmigen Grundkörper mit einer Rotationsachse auf, an dessen Außenumfang eine Mehrzahl von Schneidkanten zum Zerspanen des zu bearbeitenden Materials angeordnet ist. Die Schneidkanten stehen dabei in axialer Richtung beidseitig von dem scheibenförmigen Grundkörper hervor. Insbesondere für eine Bearbeitung von metallischen Materialien kommen üblicherweise Trennfräser zum Einsatz, bei denen der scheibenförmige Grundkörper aus einem relativ zähen Material, wie insbesondere Werkzeugstahl, ausgebildet ist und die Schneidkanten an Schneideinsätzen ausgebildet sind, die aus einem harten und verschleißbeständigen Material, insbesondere Hartmetall (auch als "cemented-carbide" bezeichnet) oder Cermet, gebildet sind. Bei Hartmetall und Cermet handelt es sich um Materialien, bei denen harte keramische Teilchen in einer Bindematrix aus einem duktileren Metall eingebunden sind.

Die Schneideinsätze sind oftmals durch Löten, Schweißen, Klemmen oder Verschrauben an dem scheibenförmigen Grundkörper befestigt. Insbesondere eine Befestigung über Klemmen oder Verschrauben ermöglicht ein einfaches Auswechseln der Schneideinsätze, wenn die Schneidkanten abgenutzt sind, wohingegen bei gelöteten oder geschweißten Schneideinsätzen ein aufwändiges Nachschleifen der Schneidkanten erforderlich ist. Bei einer Befestigung über Klemmen, die z.B. über elastische Klemmfinger an dem scheibenförmigen Grundkörper oder über separate Spannelemente erfolgen kann, wird relativ viel Raum an dem Trennfräser für die Befestigung benötigt, so dass die Anzahl der realisierbaren Zähne, d.h. der Schneiden an dem Trennfräser, bei gegebenem Außendurchmesser begrenzt ist. Ferner besteht bei einer Befestigung über Klemmen das Problem, dass der Klemmmechanismus in vielen Fällen die Spanbildung und/oder den Spanabfluss behindert, so dass es zu frühzeitigem Verschleiß am Werkzeug oder zu Beschädigungen der bearbeiteten Werkstückoberfläche kommen kann.

US 2013/0051936 A1 beschreibt einen Trennfräser und einen Trennfräser-Schneideinsatz gemäß dem Oberbegriff des Patentanspruchs 1 mit acht identischen Hauptschneidkanten, von denen vier mit positivem axialen Spanwinkel und vier mit negativem axialen Spanwinkel arbeiten können. Der Schneideinsatz ist in Aufsicht quadratisch. Jede Endfläche hat vier Ecken, zwei abgesenkte und zwei erhöhte Ecken.

US 2013/0071194 A1 beschreibt einen Schneideinsatz für Trennfräser mit einer durchgehenden Öffnung. Der Schneideinsatz und die Öffnung haben in Aufsicht jeweils eine längliche Form entlang einer gemeinsamen Einsatzlängsachse. Die Öffnung weist Seitenflächen und Endflächen auf. Zumindest eine der Endflächen ist mit einer Klemmlippe ausgebildet.

Es ist Aufgabe der Erfindung, einen verbesserten Trennfräser-Schneideinsatz, einen verbesserten Satz von Trennfräser-Schneideinsätzen und ein verbessertes rotierendes Werkzeug zum Trennfräsen metallischer Werkstoffe bereitzustellen.

Die Aufgabe wird durch einen Trennfräser-Schneideinsatz nach Anspruch 1 gelöst. Vorteilhafte Weiterbildungen sind in den abhängigen Ansprüchen angegeben.

Im Rahmen der vorliegenden Beschreibung werden die Bezeichnungen "Vorderseite", "Rückseite", "Innenseite" und "Außenseite" im Hinblick auf die Ausrichtung der jeweiligen Seiten beim Einsatz des Trennfräser-Schneideinsatzes verwendet. Die Vorderseite ist dabei bei der Rotation des Trennfräsers um seine Rotationsachse bezüglich der Rotationsrichtung vorne angeordnet und die Rückseite hinten. Bezüglich der Rotationsachse ist die Innenseite radial innenliegend angeordnet und die Außenseite radial außenliegend. Die Begriffe axial, radial und tangential werden vorliegend ebenfalls jeweils in Bezug auf die Rotationsachse verwendet, sofern nichts anderes ausdrücklich angegeben ist.

Da der Trennfräser-Schneideinsatz das Durchgangsloch, das den Trennfräser-Schneideinsatz durchdringt, zur Aufnahme einer Befestigungsschraube zum Befestigen des Trennfräser-Schneideinsatzes aufweist, ist ein schnelles und einfaches Auswechseln des Trennfräser-Schneideinsatzes ermöglicht. Gleichzeitig wird eine kompakte Befestigung erreicht, die den ungehinderten Spanabfluss nicht behindert. Das Durchgangsloch kann dabei z.B. derart angeordnet sein, dass es den Trennfräser-Schneideinsatz von der Außenseite zu der Innenseite durchdringt, so dass der Trennfräser-Schneideinsatz für eine sogenannte tangentiale Anordnung an dem scheibenförmigen Grundkörper des rotierenden Werkzeugs zum Trennfräsen ausgebildet ist. In diesem Fall erstreckt sich die Befestigungsschraube zur Befestigung des Trennfräser-Schneideinsatz in einer Richtung, die eine überwiegende radiale Richtungskomponente aufweist. Da die Rückseite ein im Wesentlichen satteldachförmiges Profil mit einer ersten Anlageflanke, einer zweiten Anlageflanke und einem Firstabschnitt aufweist, wird eine zuverlässige Befestigung und Positionierung des Trennfräser-Schneideinsatzes in der axialen Richtung (bzgl. der Rotationsachse des rotierenden Werkzeugs zum Trennfräsen) gewährleistet. Die Rückseite kann dabei z.B. ein konkav oder auch konvex satteldachförmiges Profil aufweisen. Das satteldachförmige Profil muss sich dabei nicht zwingend über die gesamte Strecke von der Innenseite zu der Außenseite erstrecken. Insbesondere kann das satteldachförmige Profil auch durch die Durchgangsbohrung für die Befestigungsschraube unterbrochen sein. Der Firstabschnitt kann dabei z.B. im Wesentlichen linienförmig als Übergangsradius von der ersten Anlageflanke auf die zweite Anlageflanke ausgebildet sein oder z.B. auch flächig als abgeflachter Firstabschnitt ausgebildet sein.

Bevorzugt durchdringt das Durchgangsloch den Trennfräser-Schneideinsatz von der Vorderseite zu der Rückseite. In diesem Fall ist der Trennfräser-Schneideinsatz für eine sogenannte radiale Anordnung an dem scheibenförmigen Grundkörper des rotierenden Werkzeugs zum Trennfräsen ausgebildet, bei der sich die Befestigungsschraube zum Befestigen des Trennfräser-Schneideinsatzes in einer Richtung erstreckt, die als Hauptkomponente eine tangentiale Richtungskomponente aufweist. In diesem Fall kann in einer sehr kompakten Bauweise eine große Anzahl von Zähnen (d.h. eine große Anzahl von Schneideinsätzen) an dem scheibenförmigen Grundkörper befestigt werden.

Gemäß einer Weiterbildung erstreckt sich das Durchgangsloch senkrecht zu einer Referenzebene, die der Haupterstreckungsebene der Vorderseite des Trennfräser-Schneideinsatzes entspricht. In diesem Fall ist eine kostengünstige pulvermetallurgische Fertigung des Trennfräser-Schneideinsatzes mit einer Matrizenanordnung geringer Komplexität ermöglicht.

Die Hauptschneidkante ist durch zumindest eine Nut in zumindest eine erste Teilhauptschneidkante und eine zweite Teilhauptschneidkante unterteilt. Durch die Unterteilung der Hauptschneidkante in zumindest die erste Teilhauptschneidkante und die zweite Teilhauptschneidkante wird bei dem Trennfräser-Schneideinsatz eine vorteilhafte Teilung des erzeugten Spans in Teilspäne erzielt. Wenn der Trennfräser-Schneideinsatz in Kombination mit einem weiteren Trennfräser-Schneideinsatz, bei dem die Nut an einer anderen lateralen Position angeordnet ist, betrieben wird, werden in dieser Weise eine gute Spankontrolle und ein glatter Schnitt erreicht.

Gemäß einer Weiterbildung ist in der Vorderseite benachbart zu der ersten Teilhauptschneidkante eine erste spanformende Vertiefung ausgebildet und benachbart zu der zweiten Teilhauptschneidkante eine zweite spanformende Vertiefung. Durch die erste spanformende Vertiefung im Bereich der ersten Teilhauptschneidkante und die separat ausgebildete zweite spanformende Vertiefung im Bereich der zweiten Teilhauptschneidkante werden die erzeugten Teilspäne jeweils individuell geformt, so dass ein besonders vorteilhafter Spanabfluss ermöglicht ist. Insbesondere können die Teilspäne sowohl in der Längsrichtung als auch in der Querrichtung in der gewünschten Weise geformt werden.
Gemäß einer Weiterbildung weist zumindest eine Teilhauptschneidkante einen verstärkten Bereich auf. Der verstärkte Bereich kann z.B. durch eine verbreiterte Fase an der Schneidkante, einen veränderten Winkel einer Fase gegenüber dem Rest der Teilhauptschneidkante und/oder einen veränderten Keilwinkel der Teilhauptschneidkante in diesem Bereich ausgebildet sein. Durch den verstärkten Bereich wird die Teilhauptschneidkante an dieser Stelle zusätzlich verstärkt.

Gemäß einer Weiterbildung unterteilt die Nut die Hauptschneidkante asymmetrisch in eine kurze erste Teilhauptschneidkante und eine lange zweite Teilhauptschneidkante. In diesem Fall kann durch Ausbildung nur einer Nut in der Hauptschneidkante eine vorteilhafte Spanteilung bereitgestellt werden und es kann durch Verwendung von zumindest zwei solchen Trennfräser-Schneideinsätzen, bei denen die jeweiligen kurzen ersten Teilhauptschneidkanten auf verschiedenen Seiten der Hauptschneidkante ausgebildet sind, in einem Satz von Trennfräser-Schneideinsätzen dabei gleichzeitig ein vorteilhafter glatter Schnitt erzielt werden.

Bevorzugt erstreckt sich die erste Teilhauptschneidkante bis zu einer ersten Schneidecke und die zweite Teilhauptschneidkante erstreckt sich bis zu einer zweiten Schneidecke und die zweite Teilhauptschneidkante weist einen verstärkten Bereich auf, der einen Abstand von der zweiten Schneidecke aufweist, der im Wesentlichen einem Abstand der Nut von der ersten Schneidecke entspricht. In dem Fall einer abwechselnden Anordnung von Trennfräser-Schneideinsätzen mit wechselnder Position der ersten Teilhauptschneidkante und der zweiten Teilhauptschneidkante (Wechselzahn-Anordnung) an einem rotierenden Werkzeug kommt somit der verstärkte Bereich der zweiten Teilhauptschneidkante in Rotationsrichtung hinter dem Bereich der Nut des vorhergehenden Trennfräser-Schneideinsatzes zur Anordnung. In diesem Bereich muss die lange zweite Teilhauptschneidkante größeren Schnittkräften widerstehen. Durch die Anordnung des verstärkten Bereichs an dieser Stelle wird ein erhöhter Verschleiß der zweiten Teilhauptschneidkante zuverlässig vermieden.

In einer vorteilhaften Ausgestaltung können die erste spanformende Vertiefung und die zweite spanformende Vertiefung asymmetrisch entlang der Hauptschneidkante angeordnet sein. In diesem Fall können die erzeugten Teilspäne speziell auf deren jeweilige Breite angepasst geformt werden, da die spanformenden Vertiefungen individuell an die zugehörige Teilhauptschneidkante angepasst werden können.

Wenn die Nut in der Außenseite ausgebildet ist, ist eine besonders günstige Spanteilung ermöglicht. Die Nut kann sich dabei z.B. von der Hauptschneidkante bis zu der Rückseite erstrecken oder aber z.B. auch nur über einen kleineren Bereich von der Hauptschneidkante in Richtung der Rückseite. Die Nut kann sich dabei bevorzugt im Wesentlichen parallel zu der Achse des Durchgangslochs erstrecken.

Gemäß einer Weiterbildung weist der Trennfräser-Schneideinsatz im Bereich der Außenseite eine größere Breite auf als im Bereich der Innenseite. In diesem Fall ist zuverlässig sichergestellt, dass der Trennfräser-Schneideinsatz im Betrieb in radialer Richtung bzgl. der Rotationsachse ausreichend freigestellt ist und keine Beschädigung der erzeugten Werkstückoberfläche erfolgt.

Die Aufgabe wird auch durch einen Satz von Trennfräser-Schneideinsätzen nach Anspruch 11 gelöst.

Der Satz von Trennfräser-Schneideinsätzen weist zumindest einen ersten Trennfräser-Schneideinsatz und zumindest einen zweiten Trennfräser-Schneideinsatz auf. Der zweite Trennfräser-Schneideinsatz weist an der lateralen Position, an der die Hauptschneidkante des ersten Trennfräser-Schneideinsatzes eine Nut aufweist, eine Teilhauptschneidkante auf. Der erste Trennfräser-Schneideinsatz weist an der lateralen Position, an der die Hauptschneidkante des zweiten Trennfräser-Schneideinsatzes eine Nut aufweist, eine Teilhauptschneidkante auf.

Wenn diese unterschiedlichen Trennfräser-Schneideinsätze des Satzes aufeinanderfolgend an einem scheibenförmigen Grundkörper eines rotierenden Werkzeugs zum Trennfräsen angeordnet werden, folgt beim Fräsen auf die Nut eines Schneideinsatzes somit jeweils eine Teilhauptschneidkante des jeweils nachfolgenden Schneideinsatzes. Dies ermöglicht gleichzeitig einen sehr ruhigen Schnitt und eine vorteilhafte Spanteilung.

Gemäß einer Weiterbildung weist die Teilhauptschneidkante des zweiten Trennfräser-Schneideinsatzes an der lateralen Position, an der die Hauptschneidkante des ersten Trennfräser-Schneideinsatzes eine Nut aufweist, einen verstärkten Bereich auf und die Teilhauptschneidkante des ersten Trennfräser-Schneideinsatzes weist an der lateralen Position, an der die Hauptschneidkante des zweiten Trennfräser-Schneideinsatzes eine Nut aufweist, einen verstärkten Bereich auf. Der verstärkte Bereich kann z.B. durch eine verbreiterte Fase an der Schneidkante, einen veränderten Winkel einer Fase gegenüber dem Rest der Teilhauptschneidkante und/oder einen veränderten Keilwinkel der Teilhauptschneidkante in diesem Bereich ausgebildet sein. Durch den verstärkten Bereich wird der Abschnitt der jeweiligen Teilhauptschneidkante besonders stabilisiert, der im Betrieb beim Fräsen aufgrund der Nut des vorhergehenden Trennfräser-Schneideinsatzes hohen Schnittkräften ausgesetzt ist. Es wird folglich eine homogene Verteilung des an der Hauptschneidkante auftretenden Verschleißes erreicht.

Die Aufgabe wird auch durch ein rotierendes Werkzeug zum Trennfräsen metallischer Werkstoffe nach Anspruch 13 gelöst.

Das satteldachförmige Profil der Auflagefläche kann bevorzugt im Wesentlichen komplementär zu einem satteldachförmigen Profil an der Rückseite des Trennfräser-Schneideinsatzes ausgebildet sein. Insbesondere kann das satteldachförmige Profil an der Auflagefläche konvex ausgebildet sein, wenn das satteldachförmige Profil an der Rückseite des Trennfräser-Schneideinsatzes konkav ausgebildet ist, und konkav, wenn letzteres konvex ausgebildet ist. Es wird eine besonders zuverlässige seitliche Fixierung und Positionierung des Trennfräser-Schneideinsatzes an dem scheibenförmigen Grundkörper erzielt. Da sich die erste ebene Flanke bis zu der ersten Hauptoberfläche erstreckt und sich die zweite ebene Flanke bis zu der zweiten Hauptoberfläche erstreckt, können die Sitze auch sehr kostengünstig und einfach hergestellt werden, ohne dass komplexe Fräswerkzeuge zum Einsatz kommen müssen. Die erste ebene Flanke kann dabei z.B. über eine Abschrägung oder eine konvexe Krümmung in die erste Hauptoberfläche übergehen. Gleichermaßen kann die zweite ebene Flanke z.B. über eine Abschrägung oder eine konvexe Krümmung in die zweite Hauptoberfläche übergehen. Da sich die Bohrungsachse der Gewindebohrung jeweils ausgehend von der Auflagefläche mit einer tangentialen Richtungskomponente und einer radial nach innen gerichteten Richtungskomponente erstreckt, können auch die Gewindebohrungen sehr einfach und kostengünstig ausgebildet werden. Ferner wird in dieser Weise eine besonders stabile Befestigung der Trennfräser-Schneideinsätze an dem Grundkörper ermöglicht. Der First des satteldachförmigen Profils kann dabei z.B. eine im Wesentlichen linienförmige Erstreckung aufweisen oder aber auch z.B. durch eine konvex gekrümmte oder ebene Fläche ausgebildet sein.

Gemäß einer Weiterbildung verläuft die Bohrungsachse relativ zu dem First schräg verkippt unter einem Bohrungswinkel zwischen 80° und 89°. In diesem Fall sind eine kostengünstige Ausbildung der Gewindebohrungen und eine zuverlässige Befestigung erzielt. Bevorzugt beträgt der Bohrungswinkel zwischen 82° und 88°.

Bevorzugt weisen die Sitze jeweils eine Anlagefläche zum Abstützen der Innenseite des Trennfräser-Schneideinsatzes auf und die Trennfräser-Schneideinsätze sind jeweils über eine Befestigungsschraube, die mit einer Gewindebohrung in dem jeweiligen Sitz zusammenwirkt, in dem Sitz befestigt. Wenn sich die Gewindebohrung entlang einer Achse erstreckt, die gegenüber einem Durchgangsloch in dem Trennfräser-Schneideinsatz derart verkippt ist, dass der Trennfräser-Schneideinsatz mit der Rückseite gegen die Auflagefläche und mit der Innenseite gegen die Anlagefläche gespannt ist, ist eine besonders belastbare und zuverlässige Fixierung des Trennfräser-Schneideinsatzes an dem Grundkörper bereitgestellt. Die Sitze können dabei insbesondere für eine radiale Anordnung der Trennfräser-Schneideinsätze ausgebildet sein, bei der sich die Gewindebohrung ausgehend von der Auflagefläche in einer Richtung erstreckt, die als Hauptkomponente eine tangentiale Richtungskomponente und zusätzlich eine nach innen gerichtete radiale Richtungskomponente aufweist. Insbesondere in diesem Fall können die Trennfräser-Schneideinsätze mit geringem Platzbedarf zuverlässig befestigt werden und das Einbringen der Gewindebohrungen leicht schräg in den Grundkörper kann in fertigungstechnisch einfacher Weise erfolgen.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: ist eine perspektivische Darstellung eines ersten Trennfräser-Schneideinsatzes gemäß einer ersten Ausführungsform;
- Fig. 2:: ist eine weitere perspektivische Darstellung des ersten Trennfräser-Schneideinsatzes;
- Fig. 3:: ist eine vergrößerte Darstellung des Bereichs einer Hauptschneidkante von Fig. 1;
- Fig. 4:: ist eine perspektivische Darstellung eines zweiten Trennfräser-Schneideinsatzes gemäß der Ausführungsform;
- Fig. 5:: ist eine perspektivische Darstellung eines Satzes von Trennfräser-Schneideinsätzen gemäß der ersten Ausführungsform;
- Fig. 6:: ist eine schematische Darstellung zur Erläuterung der relativen Anordnung eines ersten Trennfräser-Schneideinsatzes und eines zweiten Trennfräser-Schneideinsatzes;
- Fig. 7:: ist eine weitere schematische Darstellung zur Erläuterung der Anordnung eines ersten Trennfräser-Schneideinsatzes und eines zweiten Trennfräser-Schneideinsatzes;
- Fig. 8:: ist eine Darstellung eines rotierenden Werkzeugs zum Trennfräsen metallischer Werkstoffe gemäß der ersten Ausführungsform;
- Fig. 9:: ist eine Darstellung des linken Teils eines Schnitts in der Richtung D-D von Fig. 8;
- Fig. 10:: ist eine perspektivische Darstellung eines Abschnitts des Außenumfangs des rotierenden Werkzeugs mit daran angeordneten Trennfräser-Schneideinsätzen;
- Fig. 11:: ist eine Darstellung zur Erläuterung der Ausrichtung der Trennfräser-Schneideinsätze an dem rotierenden Werkzeug;
- Fig. 12:: ist eine perspektivische Darstellung der Sitze zur Aufnahme von auswechselbaren Schneideinsätzen bei dem rotierenden Werkzeug;
- Fig. 13:: ist eine Darstellung eines Schnitts in einer Ebene senkrecht zu einer Rotationsachse des rotierenden Werkzeugs zur Erläuterung der Ausrichtung der Trennfräser-Schneideinsätze;
- Fig. 14:: ist eine schematische Darstellung eines Satzes von Trennfräser-Schneideinsätzen gemäß einer zweiten Ausführungsform;
- Fig. 15:: ist eine schematische Darstellung des Verlaufs der Hauptschneidkanten bei einem ersten Trennfräser-Schneideinsatz und einem zweiten Trennfräser-Schneideinsatz bei der zweiten Ausführungsform; und
- Fig. 16:: ist eine schematische Darstellung der Anordnung eines ersten Trennfräser-Schneideinsatzes und eines zweiten Trennfräser-Schneideinsatzes gemäß der zweiten Ausführungsform an einem rotierenden Werkzeug.

### ERSTE AUSFÜHRUNGSFORM

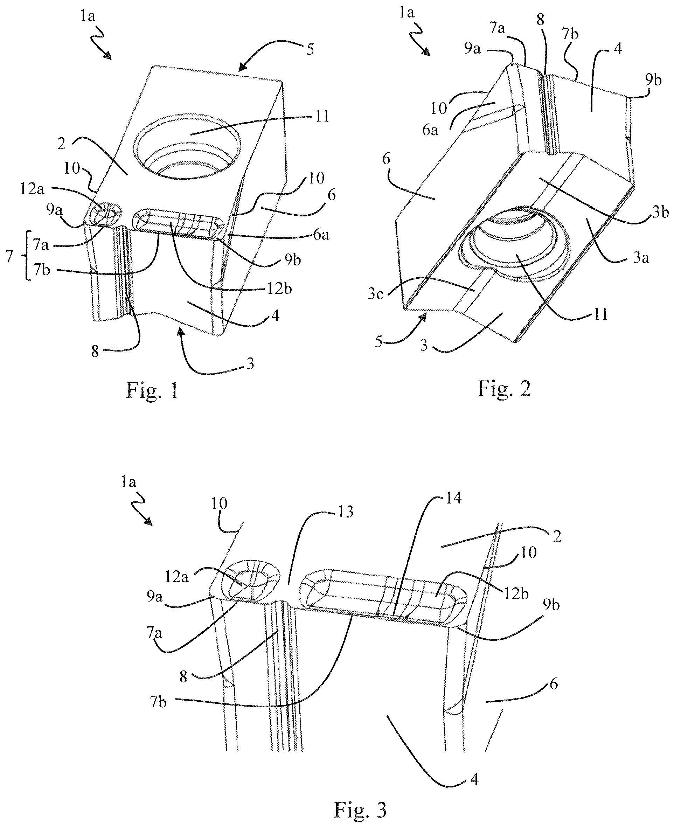

Eine erste Ausführungsform wird im Folgenden unter Bezugnahme auf die Fig. 1 bis Fig. 13 eingehender beschrieben.

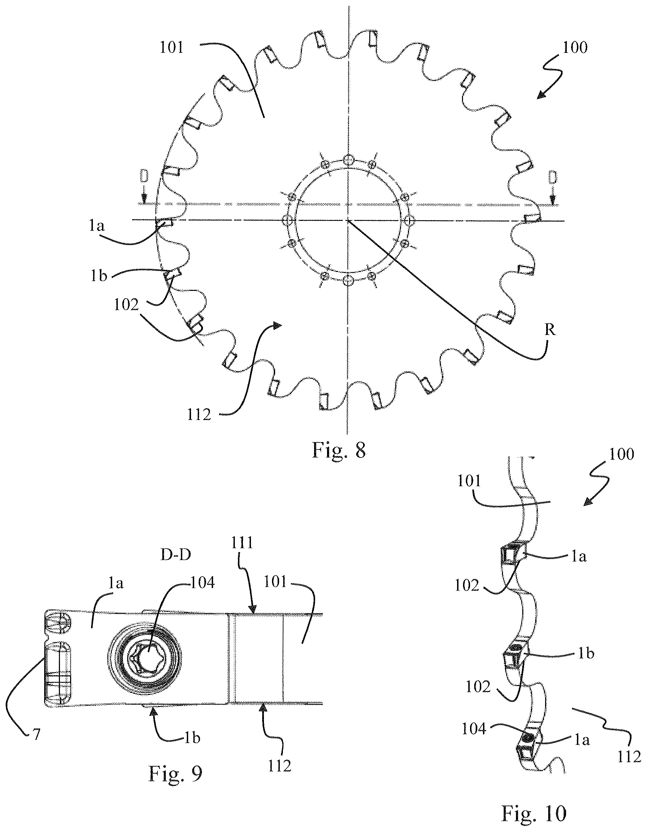

Wie z.B. in den Fig. 8 und Fig. 10 zu sehen ist, weist ein rotierendes Werkzeug 100 zum Trennfräsen metallischer Werkstoffe gemäß der Ausführungsform einen scheibenförmigen Grundkörper 101 mit einer ersten Hauptoberfläche 111 und einer zweiten Hauptoberfläche 112 auf, an dessen Außenumfang eine Mehrzahl von Sitzen 102 zur Aufnahme von auswechselbaren Schneideinsätzen ausgebildet ist. Der Grundkörper 101 ist dabei dazu ausgebildet, derart an einer Bearbeitungsmaschine befestigt zu werden, dass er im Betrieb um eine Rotationsachse R rotiert wird. Bei dem dargestellten Ausführungsbeispiel sind beispielhaft insgesamt zweiundzwanzig Sitze 102 über den Außenumfang des Grundkörpers 101 verteilt. Je nach geplanter Anwendung ist es jedoch z.B. auch möglich mehr oder weniger Sitze 102 an dem Außenumfang des Grundkörpers 101 vorzusehen, insbesondere auch deutlich mehr oder deutlich weniger Sitze 102. Obwohl die Sitze 102 bei dem Ausführungsbeispiel gleichmäßig über den Außenumfang des Grundkörpers 101 verteilt angeordnet sind, sind auch andere Anordnungen, z.B. mit ungleichmäßigen Winkelabständen zueinander möglich. Die Sitze 102 sind derart an dem Grundkörper 101 angeordnet, dass darin befestigte Schneideinsätze mit ihren Hauptschneidkanten in radialer Richtung von dem Grundkörper 101 hervorstehen und auch beidseitig in axialer Richtung bezogen auf die Rotationsachse R von dem Grundkörper 101 hervorstehen, wie weiter unten noch eingehender erläutert wird. Die Sitze 102 sind dabei derart angeordnet, dass die Hauptschneidkanten der Schneideinsätze im Betrieb im Wesentlichen eine gemeinsame Flugkreisbahn um die Rotationsachse R durchlaufen.

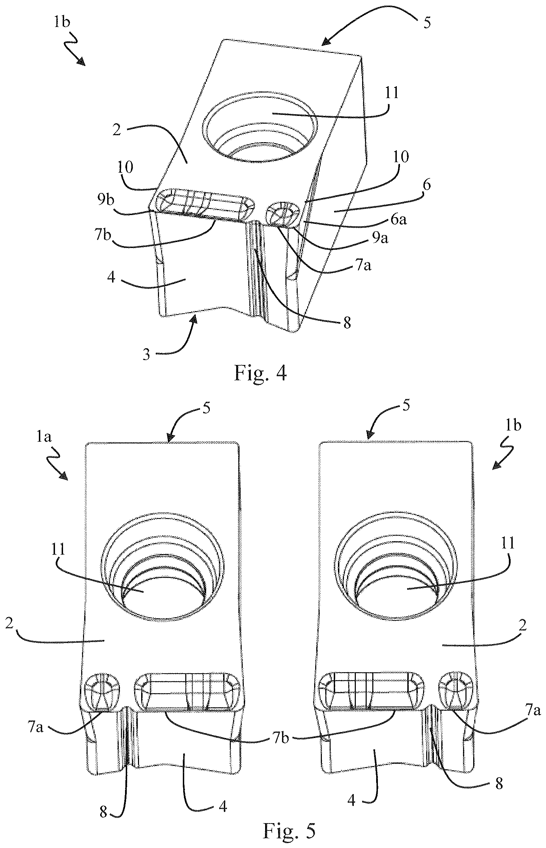

Im Folgenden wird nun aber zunächst unter Bezug auf die Fig. 1 bis Fig. 3 ein erster Trennfräser-Schneideinsatz 1a beschrieben und anschließend wird unter Bezug auf Fig. 4 ein zweiter Trennfräser-Schneideinsatz 1b beschrieben, der zusammen mit dem ersten Trennfräser-Schneideinsatz 1a einen Satz von Trennfräser-Schneideinsätzen bildet. Der Satz von Trennfräser-Schneideinsätzen ist in Fig. 5 dargestellt.

Wie in den Fig. 1 bis Fig. 3 zu sehen ist, weist der erste Trennfräser-Schneideinsatz 1a eine Vorderseite 2, eine dieser gegenüberliegend angeordnete Rückseite 3, eine Außenseite 4, eine Innenseite 5 und zwei einander gegenüberliegende Seitenflächen 6 auf. Die Vorderseite 2 ist dabei dazu ausgebildet im Betrieb bezüglich der Rotation um die Rotationsachse R vorne angeordnet zu sein, und die Rückseite 3 ist dazu ausgebildet, im Betrieb bezüglich der Rotation um die Rotationsachse R hinten angeordnet zu sein. Die Außenseite 4 ist dazu ausgebildet, im Betrieb radial außen angeordnet zu werden, und die Innenseite 5 ist dazu ausgebildet, im Betrieb radial innen angeordnet zu werden. Bei der Ausführungsform ist die Innenseite 5 durch eine im Wesentlichen ebene Fläche gebildet.

Die Vorderseite 2 ist als eine Spanfläche ausgebildet und die Außenseite 4 bildet eine Freifläche. An der Schnittlinie zwischen der Vorderseite 2 und der Außenseite 4 ist eine Hauptschneidkante 7 ausgebildet. Die Hauptschneidkante 7 weist eine erste Teilhauptschneidkante 7a und eine zweite Teilhauptschneidkante 7b auf, die durch eine Nut 8 voneinander getrennt sind. Die Nut 8 ist in der Außenseite 4 ausgebildet. Die Nut 8 erstreckt sich dabei bei der Ausführungsform als Vertiefung von der Vorderseite 2 bis zu der Rückseite 3 in der Außenseite 4. Wie z.B. in Fig. 1 zu sehen ist, unterteilt die Nut 8 die Hauptschneidkante 7 bei der Ausführungsform in eine kurze erste Teilhauptschneidkante 7a und eine lange zweite Teilhauptschneidkante 7b, so dass die Teilhauptschneidkanten 7a, 7b unterschiedlich lang ausgebildet sind. Die erste Teilhauptschneidkante 7a erstreckt sich bis zu einer ersten Schneidecke 9a. Die zweite Teilhauptschneidkante 7b erstreckt sich bis zu einer zweiten Schneidecke 9b.

Angrenzend an die erste Schneidecke 9a ist an der Schnittlinie zwischen der einen Seitenfläche 6 und der Vorderseite 2 eine Nebenschneidkante 10 ausgebildet. Gleichermaßen ist angrenzend an die zweite Schneidecke 9b an der Schnittlinie zwischen der anderen Seitenfläche 6 und der Vorderseite 2 eine weitere Nebenschneidkante 10 ausgebildet. In einem Bereich der sich entlang der jeweiligen Nebenschneidkante 10 erstreckt, weisen die Seitenflächen 6 als Nebenfreiflächen 6a ausgebildete Teilflächen auf. Die beiden Nebenfreiflächen 6a nähern sich dabei sowohl mit zunehmendem Abstand von der Vorderseite 2 als auch mit zunehmendem Abstand von der Außenseite 4 einander an, so dass sowohl in Richtung von der Nebenschneidkante 10 nach hinten, d.h. in Richtung der Rückseite 3, eine Freistellung gegeben ist, als auch in Richtung von der jeweiligen Schneidecke 9a, 9b nach innen, d.h. in Richtung der Innenseite 5, eine Freistellung gegeben ist. Die Nebenfreiflächen 6a gehen jeweils über einen schräg verlaufenden Knick in den Rest der Seitenfläche 6 über. In dem restlichen Bereich verlaufen die Seitenflächen 6 parallel zueinander. Somit weist der Trennfräser-Schneideinsatz 1a in dem Bereich der Außenseite 4 eine größere Breite auf, als im Bereich der Innenseite 5.

Es ist ein Durchgangsloch 11 zur Aufnahme einer Befestigungsschraube zum Befestigen des Trennfräser-Schneideinsatzes vorgesehen, das den Trennfräser-Schneideinsatz 1a durchdringt. Bei dem dargestellten Ausführungsbeispiel, bei dem der Trennfräser-Schneideinsatz 1a für eine radiale Anordnung an dem Grundkörper 101 ausgebildet ist, durchdringt das Durchgangsloch 11 den Trennfräser-Schneideinsatz 1a von der Vorderseite 2 bis zu der Rückseite 3. Es ist jedoch zu beachten, dass bei einem abgewandelten Trennfräser-Schneideinsatz, der für eine tangentiale Anordnung an einem Grundkörper eines Werkzeugs zum Trennfräsen ausgebildet ist, das Durchgangsloch den Trennfräser-Schneideinsatz stattdessen von der Außenseite zu der Innenseite durchdringen kann. Bei der Ausführungsform erstreckt sich das Durchgangsloch 11 senkrecht zu einer Referenzebene, die durch die Haupterstreckungsebene der Vorderseite 2 gegeben ist. Dies ermöglicht eine besonders einfache pulvermetallurgische Fertigung des Trennfräser-Schneideinsatzes 1a in einem Presswerkzeug von geringer Komplexität.

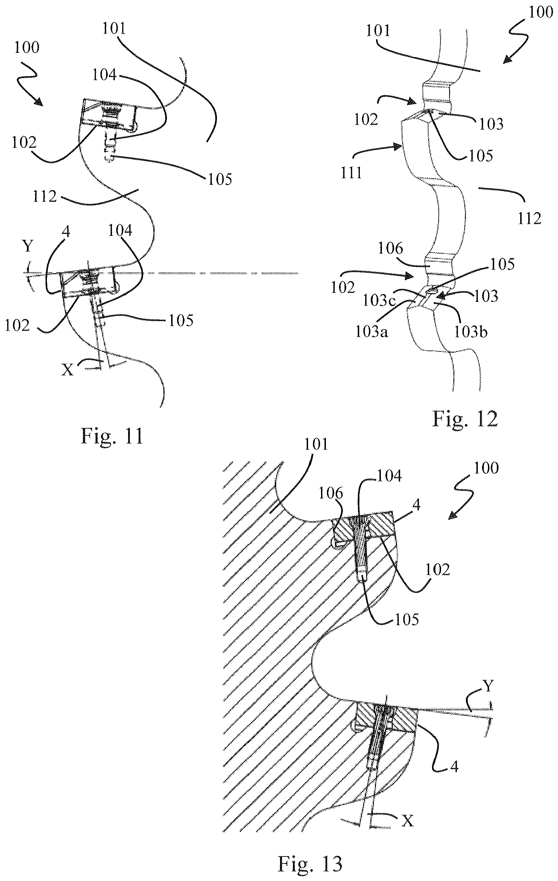

Die Rückseite 3 des Trennfräser-Schneideinsatzes 1a weist ein satteldachförmiges Profil auf, wobei sich der Firstabschnitt 3c des satteldachförmigen Profils in der Richtung von der Innenseite 5 zu der Außenseite 4 erstreckt. Bei der dargestellten Ausführungsform weist die Rückseite 3 ein konkav satteldachförmiges Profil auf und der zugeordnete Sitz 102 weist eine entsprechende Auflagefläche 103 mit einem konvex satteldachförmigen Profil zum Abstützen der Rückseite 3 auf, wie insbesondere in Fig. 12 zu sehen ist. Obwohl bei der Ausführungsform die Rückseite 3 ein konkav satteldachförmiges Profil aufweist und die Auflagefläche 103 ein konvex satteldachförmiges Profil, was bevorzugt ist, ist z.B. auch eine umgekehrte Ausgestaltung möglich, bei der die Rückseite ein konvex satteldachförmiges Profil aufweist und die Auflagefläche 103 ein konkav satteldachförmiges Profil aufweist. Obwohl sich bei dem Trennfräser-Schneideinsatz 1a das satteldachförmige Profil nur von dem Durchgangsloch 11 unterbrochen von der Innenseite 5 bis zu der Außenseite 4 erstreckt, ist es z.B. auch möglich, dass die Rückseite 3 nur über einen Teil ihrer Fläche mit einem solchen satteldachförmigen Profil versehen ist. Die Ausgestaltung der Rückseite 3 mit einem solchen satteldachförmigen Profil ermöglicht eine Zentrierung und Fixierung des Trennfräser-Schneideinsatzes 1a an dem entsprechenden Sitz 102 des Grundkörpers 101. Das satteldachförmige Profil der Rückseite 3 weist eine erste Anlageflanke 3a und eine zweite Anlageflanke 3b auf, die über einen Firstabschnitt 3c miteinander verbunden sind. Obwohl der Firstabschnitt 3c bei dem Ausführungsbeispiel im Wesentlichen linienförmig als Übergangsradius von der ersten Anlageflanke 3a auf die zweite Anlageflanke 3b ausgebildet ist, sind auch andere Ausgestaltungen möglich und der Firstabschnitt 3c kann z.B. auch eine flächige Ausgestaltung aufweisen. Die erste Anlageflanke 3a und die zweite Anlageflanke 3b erstrecken sich jeweils in der Richtung von der Innenseite 5 zu der Außenseite 4 und sind in einem Winkel zueinander ausgerichtet. Bei dem Ausführungsbeispiel erstreckt sich die erste Anlageflanke 3a bis zu der einen Seitenfläche 6 und die zweite Anlageflanke 3b erstreckt sich bis zu der gegenüberliegenden anderen Seitenfläche 6.

Wie insbesondere in Fig. 3 zu sehen ist, weist die als Spanfläche ausgebildete Vorderseite 4 in einem Bereich benachbart zu der Hauptschneidkante 7 eine Mehrzahl von spanformenden Vertiefungen 12a, 12b auf. Die spanformenden Vertiefungen 12a, 12b sind als Vertiefungen in der Vorderseite 2 ausgebildet. Bei der Ausführungsform ist benachbart zu der ersten Teilhauptschneidkante 7a eine erste spanformende Vertiefung 12a ausgebildet und benachbart zu der zweiten Teilhauptschneidkante 7b ist eine zweite spanformende Vertiefung 12b ausgebildet. Entsprechend den unterschiedlichen Breiten der ersten Teilhauptschneidkante 7a und der zweiten Teilhauptschneidkante 7b weist die erste spanformende Vertiefung 12a eine geringere Breite auf als die zweite spanformende Vertiefung 12b. In Richtung entlang der Hauptschneidkante 7 sind die erste spanformende Vertiefung 12a und die zweite spanformende Vertiefung 12b durch einen Steg 13 voneinander getrennt, der sich in dem Bereich der Hauptschneidkante 7 befindet, in dem die Nut 8 die Hauptschneidkante 7 unterteilt.

Wie insbesondere Fig. 3 zu sehen ist, weist bei der Ausführungsform die zweite Teilhauptschneidkante 7b einen verstärkten Bereich 14 auf, in dem die Teilhauptschneidkante 7b stabiler ausgebildet ist, als in den anderen Bereichen. Bei der Ausführungsform ist eine entlang der zweiten Teilhauptschneidkante 7b ausgebildete Fase in dem verstärkten Bereich 14 verbreitert ausgebildet. Es ist z.B. jedoch auch möglich, stattdessen oder zusätzlich dazu in dem verstärkten Bereich 14 den Winkel der an der Hauptschneidkante 7 ausgebildeten Fase zu verändern und/oder den Keilwinkel der Teilhauptschneidkante in diesem verstärkten Bereich 14 zu verändern.

In Fig. 5 ist ein Satz von Trennfräser-Schneideinsätzen 1a und 1b gemäß der Ausführungsform dargestellt. Der Satz von Trennfräser-Schneideinsätzen weist einen ersten Trennfräser-Schneideinsatz 1a, der wie zuvor beschrieben ausgebildet ist, und einen zweiten Trennfräser-Schneideinsatz 1b auf. Der zweite Trennfräser-Schneideinsatz 1b unterscheidet sich darin von dem ersten Trennfräser-Schneideinsatz 1a, dass die Anordnung der Nut 8, der ersten Teilhauptschneidkante 7a, der zweiten Teilhauptschneidkante 7b und der spanformenden Vertiefungen 12a, 12b vertauscht ist. Der zweite Trennfräser-Schneideinsatz 1b weist eine zu dem ersten Trennfräser-Schneideinsatz 1a gespiegelte Ausgestaltung auf, wobei die Spiegelebene senkrecht zu der Vorderseite 2 und senkrecht zu der Außenseite 4 verläuft. Da sich der zweite Trennfräser-Schneideinsatz 1b nur in dieser gespiegelten Ausgestaltung von dem ersten Trennfräser-Schneideinsatz 1a unterscheidet, werden in Bezug auf den zweiten Trennfräser-Schneideinsatz 1b dieselben Bezugszeichen wie für den ersten Trennfräser-Schneideinsatz 1a verwendet und eine detaillierte Beschreibung wird nicht wiederholt.

Bei der Ausführungsform sind die Trennfräser-Schneideinsätze 1a, 1b des Satzes von Trennfräser-Schneideinsätzen abwechselnd in den Sitzen 102 am Außenumfang des Grundkörpers 101 angeordnet, d.h. entlang des Außenumfangs folgt auf einen ersten Trennfräser-Schneideinsatz 1a ein zweiter Trennfräser-Schneideinsatz 1b und auf den zweiten Trennfräser-Schneideinsatz 1b folgt wieder ein erster Trennfräser-Schneideinsatz 1a. Dies ist z.B. in Fig. 10 zu erkennen. Wie insbesondere in Fig. 12 zu sehen ist, weist die Auflagefläche 103 des jeweiligen Sitzes 102 ein satteldachförmiges Profil mit einer ersten ebenen Flanke 103a, einer zweiten ebenen Flanke 103b und einem First 103c auf. Die erste ebene Flanke 103a erstreckt sich dabei bis zu der ersten Hauptoberfläche 111 des Grundkörpers 101. Die zweite ebene Flanke 103b erstreckt sich bis zu der zweiten Hauptoberfläche 112 des Grundkörpers. Die erste ebene Flanke 103a und die zweite ebene Flanke 103b sind dazu ausgebildet, die erste Anlageflanke 3a und die zweite Anlageflanke 3b des jeweiligen Trennfräser-Schneideinsatzes 1a, 1b abzustützen. Die Trennfräser-Schneideinsätze 1a, 1b sind jeweils über eine Befestigungsschraube 104 an dem jeweiligen Sitz 102 befestigt. Die Befestigungsschraube 104 ist mit ihrem Gewindeabschnitt durch das Durchgangsloch 11 in dem jeweiligen Trennfräser-Schneideinsatz 1a, 1b geführt und der Gewindeabschnitt ist in eine Gewindebohrung 105 eingeschraubt, die in dem Grundkörper 101 im Bereich des Sitzes 102 ausgebildet ist. Die Gewindebohrung 105 ist dabei im Bereich des Firstes 103c des satteldachförmigen Profils der Auflagefläche 103 ausgebildet. Wie in Fig. 12 zu sehen ist, weist der jeweilige Sitz 102 ferner eine Anlagefläche 106 zum Abstützen der Innenseite 5 des jeweiligen Trennfräser-Schneideinsatzes 1a, 1b auf. Die Anlagefläche 106 dient dabei zur radialen Positionierung und Abstützung des Schneideinsatzes.

Wie insbesondere in den Fig. 11 und Fig. 13 zu sehen ist, ist der First 103c, der in derselben Ebene wie die Vorderseite 2 des in dem Sitz 102 angeordneten Trennfräser-Schneideinsatzes verläuft, jeweils um einen Anstellwinkel Y gegenüber der radialen Richtung verkippt angeordnet, so dass die als Hauptfreifläche ausgebildete Außenseite 4 bei einer Rotation des Grundkörpers 101 um die Rotationsachse R ausreichend freigestellt ist. Die Bohrungsachse der Gewindebohrung 105 ist ferner gegenüber dem First 103c um einen Bohrungswinkel 90° - X verkippt ausgebildet, so dass die Bohrungsachse mit zunehmendem Abstand von der Auflagefläche 103 sowohl mit einer tangentialen Richtungskomponente als auch mit einer nach innen gerichteten radialen Richtungskomponente verläuft. Der Winkel X kann dabei bevorzugt zwischen 1° und 10° betragen, mehr bevorzugt zwischen 2° und 8°, so dass der Bohrungswinkel 90° - X zwischen 80° und 89°, bevorzugt zwischen 82° und 88°, beträgt. Aufgrund dieser Ausrichtung der Gewindebohrung 105 verläuft die Achse des Gewindeabschnitts der Befestigungsschraube 104 gegenüber der Achse des Durchgangslochs 11 in dem Trennfräser-Schneideinsatz 1a, 1b um den Winkel X verkippt. Folglich wird der Trennfräser-Schneideinsatz 1a, 1b von der Befestigungsschraube 104 sowohl mit seiner Rückseite 3 gegen die Auflagefläche 103 als auch mit seiner Innenseite 5 gegen die Anlagefläche 106 gespannt. Die verkippte Ausgestaltung der Gewindebohrung 105 ermöglicht ferner eine einfache Fertigung der Sitze 102 an dem Grundkörper 101, da die Gewindebohrungen 105 in einfacher Weise schräg von außen eingebracht werden können, wie man insbesondere in Fig. 13 erkennen kann.

Wie z.B. in Fig. 9 und Fig. 10 zu erkennen ist, bilden die Hauptschneidkanten 7 der Trennfräser-Schneideinsätze 1a, 1b die in radialer Richtung am Weitesten hervorstehenden Bereiche des rotierenden Werkzeugs 100 zum Trennfräsen metallischer Werkstoffe. Es ist ferner zu erkennen, dass die Schneidecken 9, 9b, die an beiden Seiten der Hauptschneidkante 7 angeordnet sind, jeweils die in axialer Richtung am Weitesten hervorstehenden Abschnitte bilden. Die Trennfräser-Schneideinsätze 1a, 1b stehen somit jeweils in axialer Richtung (bezüglich der Rotationsachse R) beidseitig von dem
Grundkörper 101 hervor.

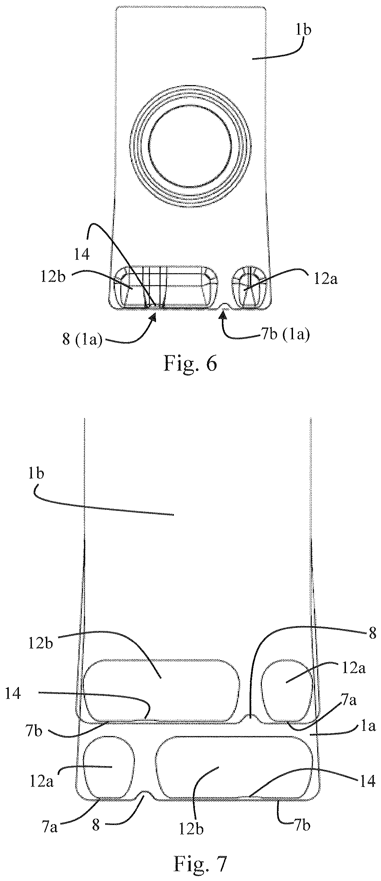

Die relative Anordnung der Trennfräser-Schneideinsätze 1a und 1b zueinander wird im Folgenden unter Bezug auf die Fig. 6 und Fig. 7 eingehender erläutert.

Fig. 6 ist eine schematische Darstellung, bei der ein zweiter Trennfräser-Schneideinsatz 1b (durchgezogene Linien) und ein erster Trennfräser-Schneideinsatz 1a (gestrichelt dargestellte Schneidkante) überlagert dargestellt sind, wobei die Bezugszeichen in Bezug auf den ersten Trennfräser-Schneideinsatz 1a den Zusatz (1a) haben. Fig. 7 ist eine schematische Darstellung zur Erläuterung der relativen Positionierung der ersten Teilhauptschneidkante 7a und der zweiten Teilhauptschneidkante 7b bei zwei aufeinander folgenden Trennfräser-Schneideinsätzen 1a, 1b bei dem rotierenden Werkzeug 100 gemäß der Ausführungsform.

Wie in den Fig. 6 und Fig. 7 zu sehen ist, ist die Hauptschneidkante 7 des ersten Trennfräser-Schneideinsatzes 1a asymmetrisch in die kurze erste Teilhauptschneidkante 7a und die lange zweite Teilhauptschneidkante 7b unterteilt und die Hauptschneidkante 7 des zweiten Trennfräser-Schneideinsatzes 1b ist genau anders herum asymmetrisch in die kurze erste Teilhauptschneidkante 7a und die lange zweite Teilhauptschneidkante 7b unterteilt. Die Nut 8 ist bei dem zweiten Trennfräser-Schneideinsatz 1b somit an einer Stelle angeordnet, an der sich bei dem ersten Trennfräser-Schneideinsatz 1a die zweite Teilhauptschneidkante 7b befindet. Die Nut 8 ist bei dem ersten Trennfräser-Schneideinsatz 1a hingegen an einer Stelle angeordnet, an der sich bei dem zweiten Trennfräser-Schneideinsatz 1b die zweite Teilhauptschneidkante 7b befindet. Bei einem Betrieb des rotierenden Werkzeugs 100 wird der erzeugte Span bei jedem Zahn, d.h. bei jedem Trennfräser-Schneideinsatz 1a, 1b, durch die erste Teilhauptschneidkante 7a und die zweite Teilhauptschneidkante 7b, die durch die Nut 8 getrennt sind, in Teilspäne unterteilt, wobei an der Position der Nut 8 ein kleiner Steg verbleibt. Bei dem nachfolgenden Zahn, d.h. bei dem nachfolgenden Trennfräser-Schneideinsatz 1b, 1a, befindet sich die Nut 8 an einer anderen lateralen Position und der Span wird wiederum in Teilspäne unterteilt. An der Position der Nut 8 des vorangehenden Zahns befindet sich aber eine Teilhauptschneidkante 7b, so dass dann der verbliebene kleine Steg entfernt wird. Durch den verstärkten Bereich 14 der zweiten Teilhauptschneidkante 7b genau in dem Bereich, in dem der vorhergehende Trennfräser-Schneideinsatz die Nut 8 aufweist, wird ein erhöhter Verschleiß dieses Abschnitts der zweiten Teilhauptschneidkante 7b zuverlässig verhindert, so dass der auftretende Verschleiß der Hauptschneidkanten 7 sehr homogen ist. Durch die erste spanformende Vertiefung 12a und die zweite spanformende Vertiefung 12b, die separat ausgebildet sind, werden die erzeugten Teilspäne jeweils individuell in der gewünschten Weise geformt.

Bei dem Betrieb des rotierenden Werkzeugs 100 gemäß der Ausführungsform schneidet somit jeder Zahn, d.h. jeder Trennfräser-Schneideinsatz 1a, 1b im Wesentlichen über die gesamte Breite des erzeugten Schlitzes. In dieser Weise ist erreicht, dass das rotierende Werkzeug 100 eine große effektive Anzahl an Zähnen aufweist und es wird ein sehr glatter Schnitt bereitgestellt. Die Vorderseite 2 ist außer im Bereich der spanformenden Vertiefungen 12a, 12b eben ausgebildet und es sind keine den Spanabfluss behindernden Bauteile vorhanden. Der Kopf der Befestigungsschraube 104 ist in dem vorderseitigen Bereich des Durchgangslochs 11 angeordnet und behindert somit ebenfalls nicht den Abfluss der erzeugten Späne.

### ZWEITE AUSFÜHRUNGSFORM

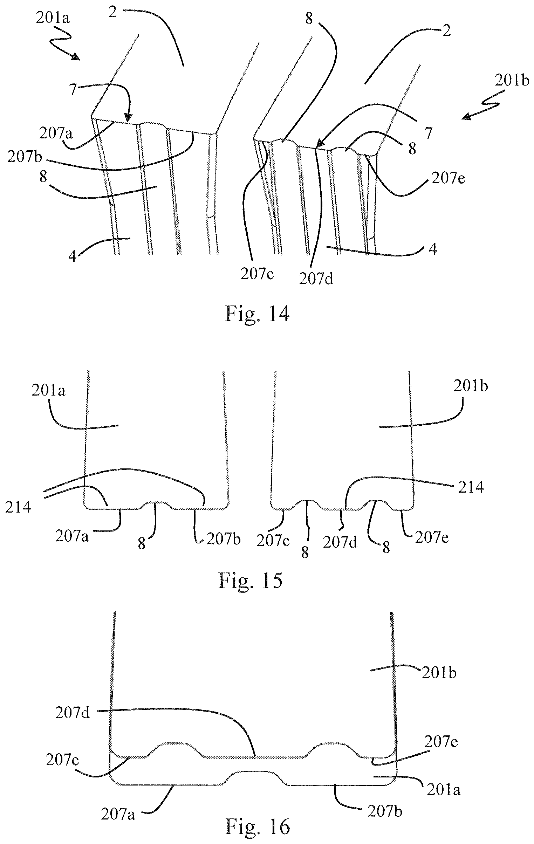

Eine zweite Ausführungsform wird im Folgenden unter Bezug auf die Fig. 14 bis Fig. 16 kurz erläutert. Ein Satz von Trennfräser-Schneideinsätzen gemäß der zweiten Ausführungsform unterscheidet sich von der zuvor beschriebenen ersten Ausführungsform in der Unterteilung der Hauptschneidkante 7 in Teilhauptschneidkanten. Da die meisten zuvor im Hinblick auf die erste Ausführungsform beschriebenen Merkmale bei der zweiten Ausführungsform identisch realisiert sind, wird deren Beschreibung nicht wiederholt. Ferner werden zur Bezeichnung der gleichen Merkmale dieselben Bezugszeichen verwendet.

Der Satz von Trennfräser-Schneideinsätzen gemäß der zweiten Ausführungsform weist einen ersten Trennfräser-Schneideinsatz 201a und einen zweiten Trennfräser-Schneideinsatz 201b auf. Die Trennfräser-Schneideinsätze 201a und 201b unterscheiden sich von den Trennfräser-Schneideinsätzen 1a, 1b gemäß der ersten Ausführungsform lediglich in der Ausgestaltung der Außenseite 4 und der Hauptschneidkante 7 sowie des unmittelbar an die Hauptschneidkante 7 angrenzenden Bereichs der Vorderseite 2, so dass nur diese Unterschiede beschrieben werden.

Ein erster Trennfräser-Schneideinsatz 201a gemäß der zweiten Ausführungsform ist in Fig. 14 schematisch auf der linken Seite dargestellt und eine zweiter Trennfräser-Schneideinsatz 201b gemäß der zweiten Ausführungsform ist in Fig. 14 schematisch auf der rechten Seite dargestellt, wobei nur der Bereich einer jeweiligen Hauptschneidkante 7 stark schematisiert dargestellt ist.

Der erste Trennfräser-Schneideinsatz 201a weist eine Hauptschneidkante 7 auf, die wie bei dem ersten Trennfräser-Schneideinsatz 1a gemäß der ersten Ausführungsform durch eine Nut 8 in eine erste Teilhauptschneidkante 207a und eine zweite Teilhauptschneidkante 207b unterteilt ist. Im Unterschied zu der ersten Ausführungsform verläuft die Nut 8 bei der zweiten Ausführungsform aber symmetrisch in der Außenseite 4, so dass die erste Teilhauptschneidkante 207a und die zweite Teilhauptschneidkante 207b zumindest im Wesentlichen dieselbe Breite aufweisen. Obwohl dies in den schematischen Darstellungen der Fig. 14 bis Fig. 16 nicht dargestellt ist, ist auch bei der zweiten Ausführungsform benachbart zu der ersten Teilhauptschneidkante 207a eine erste spanformende Vertiefung ausgebildet und benachbart zu der zweiten Teilhauptschneidkante 207b ist separat eine zweite spanformende Vertiefung ausgebildet.

Der zweite Trennfräser-Schneideinsatz 201b gemäß der zweiten Ausführungsform unterscheidet sich darin von dem zweiten Trennfräser-Schneideinsatz 1b gemäß der ersten Ausführungsform, dass die Hauptschneidkante 7 durch zwei Nuten 8 in insgesamt drei Teilhauptschneidkanten 207c, 207d, 207e unterteilt ist. Wie insbesondere in den Fig. 15 und Fig. 16 zu sehen ist, sind die Nuten 8 bei dem zweiten Trennfräser-Schneideinsatz 201b dabei jeweils an Positionen angeordnet, an denen bei dem ersten Trennfräser-Schneideinsatz 201a Teilhauptschneidkanten 207a, 207b ausgebildet sind. Gleichermaßen ist die Nut 8 bei dem ersten Trennfräser-Schneideinsatz 201a an einer Position angeordnet, an der sich bei dem zweiten Trennfräser-Schneideinsatz 201b eine Teilhauptschneidkante 207d befindet. Auch bei dem zweiten Trennfräser-Schneideinsatz 201b gemäß der zweiten Ausführungsform sind benachbart zu den jeweiligen Teilhauptschneidkanten 207c, 207d, 207e jeweils separate spanformende Vertiefungen in der Vorderseite 2 ausgebildet, die bei den schematischen Darstellungen nicht gezeigt sind.

Ferner weist bei dem zweiten Trennfräser-Schneideinsatz 201b die Teilhauptschneidkante 207d einen verstärkten Bereich 214 (nicht detailliert dargestellt) an der Position auf, an der sich bei dem ersten Trennfräser-Schneideinsatz 201a die Nut 8 befindet. Die Teilhauptschneidkanten 207a und 207b des ersten Trennfräser-Schneideinsatzes 201a weisen jeweils einen verstärkten Bereich 214 (nicht detailliert dargestellt) an den Positionen auf, an denen sich bei dem zweiten Trennfräser-Schneideinsatz 201b die Nuten 8 befinden.

Somit wird bei der zweiten Ausführungsform der Span bei dem ersten Trennfräser-Schneideinsatz 201a in zwei Teilspäne unterteilt. Bei dem zweiten Trennfräser-Schneideinsatz 201b wird der Span hingegen in drei Teilspäne unterteilt. Die jeweiligen Teilspäne werden dabei durch die individuellen spanformenden Vertiefungen in der gewünschten Weise geformt und es wir ein glatter Schnitt erreicht.

### ABWANDLUNGEN

Obwohl in Bezug auf die Ausführungsformen jeweils Realisierungen beschrieben wurden, bei denen die Trennfräser-Schneideinsätze in einer radial gespannten Anordnung an dem scheibenförmigen Grundkörper angeordnet sind, d.h. die Schneideinsätze im Wesentlichen in der radialen Richtung ausgerichtet sind und durch jeweils eine sich im Wesentlichen tangential erstreckende Befestigungsschraube in den Sitzen befestigt sind, ist auch eine Realisierung der Trennfräser-Schneideinsätze für eine tangential gespannte Anordnung an einem entsprechend angepassten Grundkörper möglich. In dem letztgenannten Fall erstrecken sich die Trennfräser-Schneideinsätze im Wesentlichen in tangentialer Richtung und die Befestigungsschraube erstreckt sich im Wesentlichen in der radialen Richtung. Für den Fall einer solchen tangentialen Anordnung durchdringt das Durchgangsloch den Trennfräser-Schneideinsatz von der Außenseite zu der Innenseite.

Obwohl in Bezug auf die Ausführungsformen jeweils beschrieben wurde, dass die Innenseite 5 und die diese abstützende Anlagefläche 106 im Wesentlichen eben ausgebildet sind, sind auch andere Ausgestaltungen möglich. Insbesondere kann auch die Innenseite 5 mit einem konkav oder konvex dachförmigen Profil ausgebildet sein und die Anlagefläche 106 kann ein entsprechendes konvex oder konkav dachförmiges Profil aufweisen.

Obwohl speziell Ausführungsformen gezeigt wurden, bei denen die Hauptschneidkanten der Trennfräser-Schneideinsätze des Satzes von Trennfräser-Schneideinsätzen entweder asymmetrisch jeweils durch eine Nut unterteilt sind (bei der ersten Ausführungsform) oder ein Trennfräser-Schneideinsatz des Satzes von Trennfräser-Schneideinsätzen eine durch eine Nut unterteilte Hauptschneidkante aufweist und der andere Trennfräser-Schneideinsatz des Satzes von Trennfräser-Schneideinsätzen eine durch zwei Nuten unterteilte Hauptschneidkante aufweist (bei der zweiten Ausführungsform), sind auch weitere Ausgestaltungen möglich. Z.B. können zwei Trennfräser-Schneideinsätze eines Satzes jeweils zwei Nuten in zueinander versetzter Anordnung aufweisen oder ein Trennfräser-Schneideinsatz des Satzes kann zwei Nuten aufweisen und der andere Trennfräser-Schneideinsatz zu diesen versetzte drei Nuten, etc. Auch in diesen Fällen weist jeweils ein Trennfräser-Schneideinsatz des Satzes an der Position, an der bei dem anderen Trennfräser-Schneideinsatz des Satzes eine Nut ausgebildet ist, eine Teilschneidkante auf. Die Teilschneidkante kann dabei jeweils bevorzugt an dieser Position verstärkt ausgebildet sein, wie es im Hinblick auf die Ausführungsformen beschrieben wurde.

## Patentansprüche

1. Trennfräser-Schneideinsatz (1a; 1b) aufweisend:
eine Vorderseite (2), die zumindest bereichsweise als eine Spanfläche ausgebildet ist;
eine der Vorderseite (2) gegenüberliegende Rückseite (3), die zumindest in einem Bereich als eine erste Anlagefläche ausgebildet ist, wobei die Rückseite (3) ein satteldachförmiges Profil mit einer ersten Anlageflanke (3a), einer zweiten Anlageflanke (3b), die über einen Firstabschnitt (3c) verbunden sind, aufweist;
eine Außenseite (4), die zumindest bereichsweise als Freifläche ausgebildet ist;
eine der Außenseite (4) gegenüberliegende Innenseite (5);
zwei einander gegenüberliegende Seitenflächen (6);
eine an der Schnittlinie der Vorderseite (2) und der Außenseite (4) ausgebildete Hauptschneidkante (7); und
ein Durchgangsloch (11), das den Trennfräser-Schneideinsatz durchdringt, zur Aufnahme einer Befestigungsschraube (104), **dadurch gekennzeichnet, dass** die Hauptschneidkante (7) durch zumindest eine Nut (8) in zumindest eine erste Teilhauptschneidkante (7a) und eine zweite Teilhauptschneidkante (7b) unterteilt ist.

2. Trennfräser-Schneideinsatz nach Anspruch 1, **dadurch gekennzeichnet, dass** das Durchgangsloch (11) den Trennfräser-Schneideinsatz von der Vorderseite (2) zu der Rückseite (3) durchdringt.

3. Trennfräser-Schneideinsatz nach Anspruch 1 oder 2, **dadurch gekennzeichnet, dass** sich das Durchgangsloch (11) senkrecht zu einer Referenzebene erstreckt, die einer Haupterstreckungsebene der Vorderseite (2) entspricht.

4. Trennfräser-Schneideinsatz nach einem der vorangehenden Ansprüche, wobei in der Vorderseite (2) benachbart zu der ersten Teilhauptschneidkante (7a) eine erste spanformende Vertiefung (12a) ausgebildet ist und
in der Vorderseite (2) benachbart zu der zweiten Teilhauptschneidkante (7b) eine zweite spanformende Vertiefung (12b) ausgebildet ist.

5. Trennfräser-Schneideinsatz nach einem der vorangehenden Ansprüche, wobei zumindest eine Teilhauptschneidkante (7a; 7b) einen verstärkten Bereich (14) aufweist.

6. Trennfräser-Schneideinsatz nach einem der vorangehenden Ansprüche, wobei die Nut (8) die Hauptschneidkante (7) asymmetrisch in eine kurze erste Teilhauptschneidkante (7a) und eine lange zweite Teilhauptschneidkante (7b) unterteilt.

7. Trennfräser-Schneideinsatz nach Anspruch 6, wobei sich die erste Teilhauptschneidkante (7a) bis zu einer ersten Schneidecke (9a) erstreckt und sich die zweite Teilhauptschneidkante (7b) bis zu einer zweiten Schneidecke (9b) erstreckt,
wobei die zweite Teilhauptschneidkante (7b) einen verstärkten Bereich (14) aufweist, der einen Abstand von der zweiten Schneidecke (9b) aufweist, der im Wesentlichen einem Abstand der Nut (8) von der ersten Schneidecke (9a) entspricht.

8. Trennfräser-Schneideinsatz nach einem der vorangehenden Ansprüche, wobei die Nut (8) in der Außenseite (4) ausgebildet ist.

9. Trennfräser-Schneideinsatz nach einem der vorangehenden Ansprüche, wobei sich der Firstabschnitt (3c) in der Richtung von der Innenseite (5) zu der Außenseite (4) erstreckt.

10. Trennfräser-Schneideinsatz nach einem der vorangehenden Ansprüche, der im Bereich der Außenseite (4) eine größere Breite aufweist als im Bereich der Innenseite (5).

11. Satz von Trennfräser-Schneideinsätzen, mit zumindest einem ersten Trennfräser-Schneideinsatz (1a) nach einem der vorangehenden Ansprüche und zumindest einem zweiten Trennfräser-Schneideinsatz (1b) nach einem der vorangehenden Ansprüche, wobei der zweite Trennfräser-Schneideinsatz (1b) an der lateralen Position, an der die Hauptschneidkante (7) des ersten Trennfräser-Schneideinsatzes (1a) eine Nut (8) aufweist, eine Teilhauptschneidkante (7b) aufweist, und
der erste Trennfräser-Schneideinsatz (1a) an der lateralen Position, an der die Hauptschneidkante (7) des zweiten Trennfräser-Schneideinsatzes (1b) eine Nut (8) aufweist, eine Teilhauptschneidkante (7b) aufweist.

12. Satz von Trennfräser-Schneideinsätzen nach Anspruch 11, wobei die Teilhauptschneidkante (7b) des zweiten Trennfräser-Schneideinsatzes (1b) an der lateralen Position, an der die Hauptschneidkante (7) des ersten Trennfräser-Schneideinsatzes (1a) eine Nut (8) aufweist, einen verstärkten Bereich (14) aufweist und
die Teilhauptschneidkante (7b) des ersten Trennfräser-Schneideinsatzes (1a) an der lateralen Position, an der die Hauptschneidkante (7) des zweiten Trennfräser-Schneideinsatzes (1b) eine Nut (8) aufweist, einen verstärkten Bereich (14) aufweist.

13. Rotierendes Werkzeug (100) zum Trennfräsen metallischer Werkstoffe, mit:
einem scheibenförmigem Grundkörper (101) mit einer ersten Hauptoberfläche (111) und einer zweiten Hauptoberfläche (112), der eine Mehrzahl von über den Außenumfang verteilten Sitzen (102) zur Aufnahme von auswechselbaren Trennfräser-Schneideinsätzen derart, dass diese sowohl radial als auch beidseitig axial von dem Grundkörper (101) hervorstehen, aufweist,
wobei die Sitze (102) jeweils eine Auflagefläche (103) zum Abstützen einer Rückseite (3) des Trennfräser-Schneideinsatzes (1a; 1b) aufweisen, wobei die Auflagefläche (103) ein satteldachförmiges Profil mit einer ersten ebenen Flanke (103a), die sich bis zu der ersten Hauptoberfläche (111) erstreckt, und einer zweiten ebenen Flanke (103b), die sich bis zu der zweiten Hauptoberfläche (112) erstreckt, und einen First (103c) aufweist,
und eine Gewindebohrung (105) in dem jeweiligen Sitz (102) ausgebildet ist, deren Bohrungsachse sich ausgehend von der Auflagefläche (103) mit einer tangentialen Richtungskomponente und einer radial nach innen gerichteten Richtungskomponente erstreckt, **dadurch gekennzeichnet, dass** eine Mehrzahl von Trennfräser-Schneideinsätzen (1a; 1b) nach einem der Ansprüche 1 bis 10 an den Sitzen (102) befestigt ist.

14. Rotierendes Werkzeug nach Anspruch 13, wobei die Bohrungsachse relativ zu dem First (103c) schräg verkippt unter einem Bohrungswinkel (90° - X) zwischen 80° und 89°, bevorzugt zwischen 82° und 88°, verläuft.

## Claims

1. Slotting cutter cutting insert (1a; 1b) having:
a front side (2), which is at least locally configured as a rake face;
a rear side (3), on the opposite side from the front side (2), which is configured at least in one region as a first contact surface, wherein the rear side (3) has a profile in the form of a pitched roof with a first contact flank (3a) and a second contact flank (3b), which are connected together via a ridge portion (3c);
an outer side (4), which is configured at least locally as a flank;
an inner side (5) on the opposite side from the outer side (4);
two side faces (6) on opposite sides from one another;
a main cutting edge (7) formed at the intersection line between the front side (2) and the outer side (4); and
a through-hole (11), which passes through the slotting cutter cutting insert, for receiving a fastening screw (104), **characterized in that** the main cutting edge (7) is subdivided by at least one groove (8) into at least one first main cutting edge part (7a) and one second main cutting edge part (7b).

2. Slotting cutter cutting insert according to Claim 1, **characterized in that** the through-hole (11) passes through the slotting cutter cutting insert from the front side (2) to the rear side (3).

3. Slotting cutter cutting insert according to Claim 1 or 2, **characterized in that** the through-hole (11) extends perpendicularly to a reference plane that corresponds to a main extension plane of the front side (2).

4. Slotting cutter cutting insert according to one of the preceding claims, wherein a first chip-forming recess (12a) is formed in the front side (2) adjacently to the first main cutting edge part (7a),
and
a second chip-forming recess (12b) is formed in the front side (2) adjacently to the second main cutting edge part (7b).

5. Slotting cutter cutting insert according to one of the preceding claims, wherein at least one main cutting edge part (7a; 7b) has a reinforced region (14).

6. Slotting cutter cutting insert according to one of the preceding claims, wherein the groove (8) subdivides the main cutting edge (7) asymmetrically into a short first main cutting edge part (7a) and a long second main cutting edge part (7b).

7. Slotting cutter cutting insert according to Claim 6, wherein the first main cutting edge part (7a) extends as far as a first cutting corner (9a) and the second main cutting edge part (7b) extends as far as a second cutting corner (9b),
wherein the second main cutting edge part (7b) has a reinforced region (14), which is at a distance from the second cutting corner (9b) that corresponds substantially to a distance of the groove (8) from the first cutting corner (9a).

8. Slotting cutter cutting insert according to one of the preceding claims, wherein the groove (8) is formed in the outer side (4).

9. Slotting cutter cutting insert according to one of the preceding claims, wherein the ridge portion (3c) extends in the direction from the inner side (5) to the outer side (4).

10. Slotting cutter cutting insert according to one of the preceding claims, which has a greater width in the region of the outer side (4) than in the region of the inner side (5).

11. Set of slotting cutter cutting inserts, having at least one first slotting cutter cutting insert (1a) according to one of the preceding claims and at least one second slotting cutter cutting insert (1b) according to one of the preceding claims, wherein the second slotting cutter cutting insert (1b) has a main cutting edge part (7b) at the lateral position at which the main cutting edge (7) of the first slotting cutter cutting insert (1a) has a groove (8), and
the first slotting cutter cutting insert (1a) has a main cutting edge part (7b) at the lateral position at which the main cutting edge (7) of the second slotting cutter cutting insert (1b) has a groove (8) .

12. Set of slotting cutter cutting inserts according to Claim 11, wherein
the main cutting edge part (7b) of the second slotting cutter cutting insert (1b) has a reinforced region (14) at the lateral position at which the main cutting edge (7) of the first slotting cutter cutting insert (1a) has a groove (8), and
the main cutting edge part (7b) of the first slotting cutter cutting insert (1a) has a reinforced region (14) at the lateral position at which the main cutting edge (7) of the second slotting cutter cutting insert (1b) has a groove (8).

13. Rotating tool (100) for the slotting cutting of metal materials, having:
a disc-like main body (101) with a first main surface (111) and a second main surface (112), which has a plurality of seats (102), distributed around the outer circumference, for receiving interchangeable slotting cutter cutting inserts such that the latter protrude both radially and axially, on both sides, from the main body (101),
wherein the seats (102) each have a support face (103) for supporting a rear side (3) of the slotting cutter cutting insert (1a; 1b), wherein the support face (103) has a profile in the form of a pitched roof with a first planar flank (103a), which extends as far as the first main surface (111), and a second planar flank (103b), which extends as far as the second main surface (112), and a ridge (103c),
and a threaded bore (105) is formed in each seat (102), the bore axis of which extends from the support face (103) with a tangential direction component and a radially inwardly directed direction component, **characterized in that** a plurality of slotting cutter cutting inserts (1a; 1b) according to one of Claims 1 to 10 are fastened to the seats (102) .

14. Rotating tool according to Claim 13, wherein the bore axis extends, relative to the ridge (103c), in a manner tilted at a bore angle (90° - X) of between 80° and 89°, preferably between 82° and 88°.

## Revendications

1. Insert de coupe de fraise de séparation (1a ; 1b) comprenant :
un côté avant (2) qui est conçu au moins par endroits comme une face d'attaque ;
un côté arrière (3) opposé au côté avant (3) et conçu comme une première face de placement au moins dans une zone, le côté arrière (3) ayant un profil en forme de toit en selle pourvu d'un premier flanc de placement (3a) et d'un deuxième flanc de placement (3b), lesquels sont reliés par une partie formant faîtage (3c) ;
un côté extérieur (4) qui est conçu au moins par endroits comme une face de dépouille ;
un côté intérieur (5) opposé au côté extérieur (4) ;
deux faces latérales (6) opposées l'une à l'autre ;
une arête de coupe principale (7) formée à l'intersection du côté avant (2) et du côté extérieur (4) ; et
un trou traversant (11) ménagé à travers l'insert de coupe de fraise de séparation et destiné à recevoir une vis de fixation (104), **caractérisé en ce que** l'arête de coupe principale (7) est divisée par au moins une gorge (8) en au moins une première partie d'arête de coupe principale (7a) et une deuxième partie d'arête de coupe principale (7b).

2. Insert de coupe de fraise de séparation selon la revendication 1, **caractérisé en ce que** le trou traversant (11) est ménagé à travers l'insert de coupe de fraise de séparation depuis le côté avant (2) jusqu'au côté arrière (3) .

3. Insert de coupe de fraise de séparation selon la revendication 1 ou 2, **caractérisé en ce que** le trou traversant (11) s'étend perpendiculairement à un plan de référence qui correspond à un plan d'extension principal du côté avant (2).

4. Insert de coupe de fraise de séparation selon l'une des revendications précédentes, un premier évidement de formation de copeaux (12a) étant ménagé dans le côté avant (2) au voisinage de la première arête de coupe principale (7a) et un deuxième évidement de formation de copeaux (12b) étant ménagé dans le côté avant (2) au voisinage de la deuxième arête de coupe principale (7b).

5. Insert de coupe de fraise de séparation selon l'une des revendications précédentes, au moins une partie d'arête de coupe principale (7a ; 7b) comportant une zone renforcée (14).

6. Insert de coupe de fraise de séparation selon l'une des revendications précédentes, la gorge (8) divisant l'arête de coupe principale (7) de manière asymétrique en une première partie d'arête de coupe principale courte (7a) et une deuxième partie d'arête de coupe principale longue (7b).

7. Insert de coupe de fraise de séparation selon la revendication 6, la première partie d'arête de coupe principale (7a) s'étendant jusqu'à un premier coin de coupe (9a) et la deuxième partie d'arête de coupe principale (7b) s'étendant jusqu'à un deuxième coin de coupe (9b),
la deuxième partie d'arête de coupe principale (7b) comportant une zone renforcée (14) qui est à une distance du deuxième coin de coupe (9b) qui correspond sensiblement à une distance de la gorge (8) par rapport au premier coin de coupe (9a).

8. Insert de coupe de fraise de séparation selon l'une des revendications précédentes, la gorge (8) étant ménagée du côté extérieur (4).

9. Insert de coupe de fraise de séparation selon l'une des revendications précédentes, la partie formant faîtage (3c) s'étendant dans la direction allant du côté intérieur (5) au côté extérieur (4).

10. Insert de coupe de fraise de séparation selon l'une des revendications précédentes, lequel présente une plus grande largeur dans la zone du côté extérieur (4) que dans la zone du côté intérieur (5).

11. Ensemble d'inserts de coupe de fraise de séparation, comprenant au moins un premier insert de coupe de fraise de séparation (la) selon l'une des revendications précédentes et au moins un deuxième insert de coupe de fraise de séparation (1b) selon l'une des revendications précédentes,
le deuxième insert de coupe de fraise de séparation (1b) comportant une partie d'arête de coupe principale (7b) à la position latérale où l'arête de coupe principale (7) du premier insert de coupe de fraise de séparation (la) comporte une gorge (8), et
le premier insert de coupe de fraise de séparation (la) comportant une partie d'arête de coupe principale (7b) à la position latérale où l'arête de coupe principale (7) du deuxième insert de coupe de fraise de séparation (1b) comporte une gorge (8).

12. Ensemble d'inserts de coupe de fraise de séparation selon la revendication 11,
la partie d'arête de coupe principale (7b) du deuxième insert de coupe de fraise de séparation (1b) comportant une zone renforcée (14) à la position latérale où l'arête de coupe principale (7) du premier insert de coupe de fraise de séparation (la) comporte une gorge (8) et
la partie d'arête de coupe principale (7b) du deuxième insert de coupe de fraise de séparation (la) comportant une zone renforcée (14) à la position latérale où l'arête de coupe principale (7) du deuxième insert de coupe de fraise de séparation (1b) comporte une gorge (8).

13. Outil rotatif (100) destiné au fraisage de séparation de matières métalliques, ledit outil rotatif comprenant :
un corps de base (101) en forme de disque pourvu d'une première surface principale (111) et d'une deuxième surface principale (112) et comportant une pluralité de sièges (102) répartis sur la périphérie et destinés à recevoir des inserts de coupe de fraise de séparation remplaçables de sorte que ceux-ci fassent saillie à la fois radialement et des deux côtés axialement du corps principal (101),
les sièges (102) comportant chacun une face d'appui (103) destinée à supporter un côté arrière (3) de l'insert de coupe de fraise de séparation (1a ; 1b),
la face d'appui (103) ayant un profil en forme de toit en selle pourvu d'un premier flanc plan (103a), qui s'étend jusqu'à la première surface principale (111), et un deuxième flanc plan (103b) qui s'étend jusqu'à la deuxième surface principale (112), et ayant un faîtage (103c),
et un perçage fileté (105) étant ménagé dans le siège respectif (102), l'axe du perçage fileté s'étendant depuis la surface d'appui (103) avec un composant de direction tangentielle et une composante de direction dirigée radialement vers l'intérieur, **caractérisé en ce qu'**une pluralité d'inserts de coupe de fraise de séparation (1a ; 1b) selon l'une des revendications 1 à 10 sont fixés aux sièges (102).

14. Outil rotatif selon la revendication 13, l'axe de perçage étant incliné obliquement par rapport au faîtage (103c) d'un angle de perçage (90°-X) compris entre 80° et 89°, de préférence entre 82° et 88°.
